# EUROPEAN PATENT SPECIFICATION

(11) **EP 0 684 970 B1**
(45) Date of publication and mention of the grant of the patent: **12.08.1998**
(21) Application number: 95906009.6
(22) Date of filing: 16.12.1994
(51) Int. Cl.: C08L 23/06, C08L 23/20, C08K 3/00

(54) **POLYOLEFIN BLENDS FOR LID STOCK FABRICATION**
POLYOLEFINMISCHUNGEN ZUR HERSTELLUNG VON VERSCHLUSSDECKELN
MELANGES POLYOLEFINIQUES DESTINES A LA FABRICATION DE MATERIAUX POUR COUVERCLES

(30) Priority: 16.12.1993 US 168445
(43) Date of publication of application: 06.12.1995
(73) Proprietor: SHELL OIL COMPANY, Houston, Texas 77252-2463 (US)
(72) Inventor: LEE, Robert, W., Houston, TX 77979 (US)
(74) Representative: Ellis-Jones, Patrick George Armine
(86) International application number: US9414629
(87) International publication number: WO9516743

(56) References cited:
- EP-A- 0 178 061
- EP-A- 0 207 626

## Description

This invention generally relates to peelable seals used in packaging applications. More particularly, the invention relates to peelable seals having desirable properties made from polybutylene and other polyolefinic materials. The invention also relates polymer blends suitable for use in the peelable seals, methods of manufacturing the peelable seals from the polymer blends and articles of manufacture such a packaging containers comprising the seals.

Peelable seals are well known in the art. These peelable seals include those made by blending polybutylene with incompatible polymers and using this blend as a seal layer. During peeling, cohesive failure occurs due to the incompatibility of the blend components. It is known that after blending, polymer pairs are not usually completely compatible. They are considered as qualitatively incompatible, semi-compatible, or compatible depending on whether two distinct or immiscible phase remain, or partial mixing of the polymers occur at the molecular level, or a single thermodynamically stable phase is formed. In most instances true miscibility is rarely attained, and it is sufficient if the polymers blend achieve the intended purpose.

Due to the incompatibility of the blend components used in the manufacture of peelable seals, controlled failure generally occurs within the sealant layer. This failure is largely induced by the weak intermolecular forces of the dissimilar materials, relative to the adhesive force at the interface of seal layer and the heat-sealed substrate. This failure is typically referred to as cohesive failure, and it generally results in a clean uniform separation.

However, it is also the case that cohesive failure sometimes result in residue of stringy materials left on the peeling surface. The stringy deposit is usually caused by either improper mixing/blending of polymer components, or by the tensile property of the prefabricated film which competes with the sealing force during the peeling action. In spite of its origin the presence of the stringy materials is undesirable to end-users of the sealed products for inter alia hygienic, aesthetic, and health reasons.

In view of the wide and growing use of peelable seals in rigid packaging applications inclusive of food, medical devices, and pharmaceutical it is desirable to discover and to utilize polymer blends which are miscible or substantially miscible and/or to utilize techniques that avoids the formation of deposits of stringy materials as a consequence of cohesive failure. EP-A-0 178 061 describes films and sheets made from blends of an ethylenic polymer co-polymer a butene-1 polymer or copolymer, and a propylene polymer or copolymer.

It is a general object of the invention to provide for easy-opening peelable seals.

It is also an object of the invention to provide for easy-opening peelable seals which have desirable properties, including the non-formation or minimal formation of stringy deposits during cohesive failure.

Accordingly, it is now provided a peelable seal made from a blend comprising polybutylene, high density polyethylene, low density polyethylene, and at least one mineral filler. The individual polymers are present in the blend in an amount within the range of from 5 to 70 wt%, but preferably from 10-35 wt%. The blend, as a polymer melt can be directly coated onto a suitable substrate.

Polybutylene is often blended with other polymeric materials to form a partially miscible blend for easy-opening packaging applications. Typically films are made of such blends. Such films are either sealed onto itself, or onto other plastic containers to provide the sealing integrity of the containers. One drawback of this method is that the film has mechanical integrity such as tensile property which contributes to the formation of stringy deposits during peeling.

It is expected that a well-dispersed polymer blend having greater compatibility will avoid or minimise the formation of stringy deposits during cohesive failure. The blend of the present invention comprising polybutylene, high density polyethylene, low density polyethylene, at least one mineral filler, and the process of coating the blend onto a suitable substrate is a useful means of solving the problem of formation of stringy deposits during cohesive failure. The components of the blend, and the processes of the invention are more fully disclosed in subsequent portions of this specification.

Typically, the poly(1-butene) component of the blends of the invention is a semicrystalline 1-butene polymer. This polymer is suitably a homopolymer containing substantially only 1-butene moieties or is a copolymer having a major proportion of units derived from 1-butene and a minor proportion of units derived from a second α-olefin of up to 14 carbon atoms inclusive, e.g. ethylene, propylene, 1-hexene, 4-methyl-1-pentene, 1-octene or 1-tetradecene, or mixtures thereof. The poly(1-butene) blend component usefully contains up to 30 mole% of such second α-olefins. When the poly(1-butene) is copolymeric, proportions of the second α-olefin range from 0.1 mole% to 20 mole%.

The degree of crystallinity of the semicrystalline poly(1-butene) as measured by an X-ray diffraction method is from 10% to 60%, but preferably is from 35% to 60%. The crystallization temperature of the poly(1-butene) as measured by a differential scanning calorimeter is typically from 30°C to 90°C and the limiting viscosity number of the polymer, as determined by a conventional capillary viscosity measuring device in decalin at 135°C, is from 0.8 dl/g to 8 dl/g, more often from 1 dl/g to 6 dl/g. The poly(1-butene) typically has a melt index of from 1-40 gm/10 mins. and preferably of from 3-20 gm/10 mins. Such poly(1-butene) polymers, both homopolymeric and copolymeric are commercially available, and can be obtained from Shell Chemical Company, Houston, Texas.

High density polyethylene (HDPE), with an essentially linear structure can be produced in several ways, including radical polymerization of ethylene at extremely high pressure, stereoregular polymerization using a reduced transition metal catalyst, and with supported metal oxide catalyst. HDPE is most commonly manufactured by either a slurry process or gas phase process.

Typically high density polyethylene is a highly crystalline polymer, containing less than one side chain per 200 carbon atoms in the main chain. Melting point is above 130°C, 20 to 25°C higher than low density polyethylene, and density is in the range of from 0.94 to 0.97 gm/cm³ (0.94 to 0.97 gm/cc). A typical example of high density polyethylene, used in this invention is Quantum Petrothene LS 6180-00 (Trade name), which has 22 melt index, and a density of 0.962 gm/cm³ (0.962 gm/cc).

Most of the differences in properties between branched and linear polyethylene can be attributed to the higher crystallinity of the later polymer. Linear polyethylene, or HDPE, is stiffer than the branched materials, and has a higher crystalline melting point and greater tensile strength and hardness.

Low density polyethylene which is useful in the practice of this invention is a thermoplastic obtained through the high-pressure free radical polymerization of ethylene. Conventional low density polyethylene is manufactured by one of two processes, tubular or autoclave. In both processes, high purity ethylene and an initiator are introduced into the reactor at high pressures and temperatures. The initiator may be either oxygen or an organic peroxide.

Unlike the linear structure obtained in other polyethylene processes, the low density polyethylene, with density normally of from 0.89 to less than 0.94 gm/cm³ (gm/cc), has a branched structure resulting from the high pressure process. The branching gives conventional low density polyethylene its distinctive properties of clarity, flexibility, and ease of processability.

Any low density polyethylene that has a density of 0.94 gm/cm³ (0.94 gm/cc) or less, and melt index of 2 to 15 can be used in the formulation. A typical example of low density polyethylene used in the formulations is Chevron Poly-eth 1019 (Trade name), which has 14.5 melt index and a density of 0.92 gm/cm³ 0.92 gm/cc.

All mineral fillers are useful in the practice of this invention, and are present in the blend in an amount of from 1-10 wt%. The preferred mineral filler is talc having a particle size of from 0.5-7µm (0.5-7 microns), but preferably of less than 2 µm (2 microns). The designation talc covers a wide range of natural products. For reporting purposes, the United States Bureau of Mines considers talc, soapstone, and pyrophyllite as one group. The mineral talc is a hydrated magnesium silicate. Compositions will vary depending on the locality from which the talc is mined. Commercially available talc often contains calcite, dolomite and other inorganic components. The presence and the relative amounts of those various contaminants of talc are also often indicative of the area from which it is mined.

There are several forms of ore from which talc products can be made. The commercial grades of talc used for plastic applications are fine ground products consisting of thin platelets. Due to the platy nature of this special form of talc, it is considered to be a reinforcing filler to distinguish it from the other particular mineral fillers.

Plastics filled with a platy talc always exhibit a higher stiffness and creep resistance, both at ambient and elevated temperatures. However, in order to maximize these enhanced properties, it is essential that proper melt compounding techniques be used to incorporate talc into the polymer. Proper compounding of the fine talc particles requires all the special melt compounding actions: smearing, folding, stretching, wiping, compression, and shearing, to fully wet the talc particles with molten polymer and to achieve a high degree of dispersion resulting in a homogeneous composite.

The purpose of adding talc to the polymer compound is to improve the die cutting of the lid stock from the web, and to eliminate stringing during peeling. A typical example of talc used in the formulations is Microtuff F talc (trade name), available from the Minerals, Pigments and Metals Division of Pfizer Inc.

The heat sealing layer can be made with a number of conventional molten polymer processing techniques. Blow film and cast film processes are a few examples. In these processes, plastic films having certain mechanical integrity, such tensile strength and elasticity modulus, were made. Often times, due to the nature of the processing technique used, film properties in the machine direction are higher than these in the transverse direction. The high and unbalanced mechanical properties of these films are considered not suitable for cohesive failure susceptible peelable films. This is because during peeling, the tensile property of the film competes against the adhesive force between the sealing layers so that instead of a clean, cohesive peeling, stringing of the film results rendering the product unacceptable.

In extrusion coating, a continuous curtain of molten polymer mixture extruded from a slot die is applied to a moving web of suitable substrate such as paper, board, film, or foil. The thin gap between a nip of a rubber roll and a chill roll spreads and squeezes the molten polymer to form a thin layer of coating on the surface of substrates.

In particular, peelable seal is produced on a substrate by extrusion coating a blend of the present invention onto a substrate.

The following Example illustrates the invention.

### Example

Twenty weight percent (20 wt%) of Shell polybutylene PB0300 (trade name), 50% wt. of Quantum Petrothene LDPE NA 205-000, (trade name) (3 MI, 0.924 in density), 25% of Quantum Petrothene HDPE LS 6180-00 (trade name), and 5% Pfizer Microtuff F (trade name) talc were mixed and tumbled together for 30 minutes before being fed into a twin-screw extruder for melt compounding. The extruder temperature profile was set at the range of 200°C to 230°C. The resulting blend had a density of 0.925 gm/cm³ (0.925 gm/cc) and 10 MI, as polybutylene particles in less than 1 µm (1 micron) size, and the talc particles, were uniformly dispersed in the polyethylene mixture matrix.

The polymer blend was used for making lid stock web using co-extrusion coating process in which Dow Primacore 3440 (trade name), ethylene-acrylic acid copolymer was used as the tie layer to bond the polymer blend onto a pre-selected coating substrate. The coating substrate used include aluminum foil, paper, and a high temperature polymeric films, such as polyester. The co-extrusion coating temperature ranged from 300°C to 320°C, and the coating thickness was 10 to 15 µm (10 to 15 microns) for each coating layer.

The co-extruded web was then die cut into lid stock, which was used to heat seal polypropylene or polyethylene containers. The lid stocks were then heat-sealed onto the flange area of cups, trays, and containers made from polypropylene or polyethylene in order to complete the sealing of the packaging. The sealed containers were tested to ensure that they are hand-peelable by hand peeling some of the containers. The peeling resulted in a stringy-free cohesive failure of the lid stock from the containers. The peel strength of this lid stock was measured to be about 450 to 1200 gm/15mm, depending upon the sealing conditions.

## Claims

1. A polymer blend comprising from 5 to 70 weight percent of polybutylene, from 5 to 70 weight percent of high density polyethylene, from 5 to 70 weight percent of low density polyethylene and from 1 to 10 weight percent of at least one mineral filler.

2. A blend according to claim 1 wherein the polybutylene has a melt index of from 1 to 40 gm/10 mins.

3. A blend according to claim 1 or 2 wherein the high density polyethylene has a density of from 0.94 to 0.97 gm/cm³ (0.94 to 0.97 gm/cc).

4. A blend according to any one of the preceding claims wherein the low density polyethylene has a density of from 0.89 to less than 0.94 gm/cm³ (0.89 to less than 0.94 gm/cc).

5. A blend according to any one of the preceding claims wherein the mineral filler is talc.

6. A blend according to claim 5 wherein the talc has a particle size of from 0.5 to 7 µm (0.5 to 7 microns).

7. A blend according to any one of the preceding claims which comprises from 10 to 35 weight percent of polybutylene, from 10 to 35 weight percent of high density polyethylene and from 10 to 35 weight percent of low density polyethylene.

8. A blend according to any one of the preceding claims wherein the polybutylene has a melt index of from 3 to 20 gm/10 mins.

9. A blend according to any one of the preceding claims wherein the high density polyethylene has a density of 0.962 gm/cm³ (0.962 gm/cc).

10. A blend according to any one of the preceding claims wherein the low density polyethylene has a density of 0.92 gm/cm³ (0.92 gm/cc).

11. A blend according to any one of claims 1 to 5 or 7 to 10 wherein the mineral filler has a particle size of less than 2 µm (2 microns).

12. A peelable seal comprising a blend as claimed in any one of claims 1 to 11.

13. A method for producing a peelable seal as claimed in claim 12 on a substrate which method comprises extrusion coating a blend as claimed in any one of claims 1 to 11 onto a substrate.

14. An article of manufacture comprising a peelable seal as claimed in claim 12.

15. An article according to claim 14 which is a packaging container.

## Patentansprüche

1. Polymergemisch, umfassend 5 bis 70 Gew.-% Polybutylen, 5 bis 70 Gew.-% Polyethylen hoher Dichte, 5 bis 70 Gew.-% Polyethylen niederer Dichte und 1 bis 10 Gew.-% mindestens eines Mineral-Füllstoffs.

2. Gemisch nach Anspruch 1, wobei das Polybutylen einen Schmelzindex von 1 bis 40 g/10 min aufweist.

3. Gemisch nach Anspruch 1 oder 2, wobei das Polyethylen hoher Dichte eine Dichte von 0,94 bis 0,97 g/cm³ aufweist.

4. Gemisch nach einem der vorangehenden Ansprüche, wobei das Polyethylen niederer Dichte eine Dichte von 0,89 bis weniger als 0,94 g/cm³ aufweist.

5. Gemisch nach einem der vorangehenden Ansprüche, wobei der Mineralfüllstoff Talkum ist.

6. Gemisch nach Anspruch 5, wobei das Talkum eine Teilchengröße von 0,5 bis 7 µm aufweist.

7. Gemisch nach einem der vorangehenden Ansprüche, umfassend 10 bis 35 Gew.-% Polybutylen, 10 bis 35 Gew.-% Polyethylen hoher Dichte und 10 bis 35 Gew.-% Polyethylen niederer Dichte.

8. Gemisch nach einem der vorangehenden Ansprüche, wobei das Polybutylen einen Schmelzindex von 3 bis 20 g/10 min aufweist.

9. Gemisch nach einem der vorangehenden Ansprüche, wobei das Polyethylen hoher Dichte eine Dichte von 0,962 g/cm³ aufweist.

10. Gemisch nach einem der vorangehenden Ansprüche, wobei das Polyethylen niederer Dichte eine Dichte von 0,92 g/cm³ aufweist.

11. Gemisch nach einem der Ansprüche 1 bis 5 oder 7 bis 10, wobei der Mineralfüllstoff eine Teilchengröße von weniger als 2 µm aufweist.

12. Abziehbare Dichtung, umfassend ein Gemisch nach einem der Ansprüche 1 bis 11.

13. Verfahren zur Herstellung einer abziehbaren Dichtung nach Anspruch 12 auf einem Substrat, wobei das Verfahren das Extrusionsbeschichten eines Substrats mit einem Gemisch nach einem der Ansprüche 1 bis 11 umfaßt.

14. Gegenstand, umfassend eine abziehbare Dichtung nach Anspruch 12.

15. Gegenstand nach Anspruch 14, der ein Verpackungsbehälter ist.

## Revendications

1. Mélange de polymères comprenant 5 à 70 % en poids de polybutylène, 5 à 70 % en poids de polyéthylène haute densité, 5 à 70 % en poids de polyéthylène basse densité et 1 à 10 % en poids d'au moins une charge minérale.

2. Mélange selon la revendication 1, dont le polybutylène a un indice de fluidité à l'état fondu de 1 à 40 g/10 min.

3. Mélange selon la revendication 1 ou 2, dont le polyéthylène haute densité a une densité de 0,94 à 0,97 g/cm³ (0,94 à 0,97 g/cc).

4. Mélange selon l'une quelconque des revendications précédentes, dont le polyéthylène basse densité a une densité de 0,89 à moins de 0,94 g/cm³ (0,89 à moins de 0,94 g/cc).

5. Mélange selon l'une quelconque des revendications précédentes, dont la charge minérale est du talc.

6. Mélange selon la revendication 5, dont le talc a une taille de particule de 0,5 à 7 µm (0,5 à 7 microns).

7. Mélange selon l'une quelconque des revendications précédentes, qui comprend 10 à 35 % en poids de polybutylène, 10 à 35 % en poids de polyéthylène haute densité et 10 à 35 % en poids de polyéthylène basse densité.

8. Mélange selon l'une quelconque des revendications précédentes, dont le polybutylène a un indice de fluidité à l'état fondu de 3 à 20 g/10 min.

9. Mélange selon l'une quelconque des revendications précédentes, dont le polyéthylène haute densité a une densité de 0,962 g/cm³ (0,962 g/cc).

10. Mélange selon l'une quelconque des revendications précédentes, dont le polyéthylène basse densité a une densité de 0,92 g/cm³ (0,92 g/cc).

11. Mélange selon l'une quelconque des revendications 1 à 5 et 7 à 10, dont la charge minérale a une taille de particule inférieure à 2 µm (2 microns).

12. Joint décollable comprenant un mélange tel que revendiqué dans l'une quelconque des revendications 1 à 11.

13. Procédé pour former sur un support un joint décollable tel que revendiqué dans la revendication 12, qui comprend l'application sur un support, par extrusion, d'un mélange tel que revendiqué dans l'une quelconque des revendications 1 à 11.

14. Article manufacturé comprenant un joint décollable tel que revendiqué dans la revendication 12.

15. Article selon la revendication 14, qui est un récipient pour l'emballage.
